# EUROPÄISCHE PATENTANMELDUNG

(11) **EP 4 617 431 A1**
(43) Veröffentlichungstag der Anmeldung: **17.09.2025**
(21) Anmeldenummer: 25159663.1
(22) Anmeldetag: 24.02.2025
(51) Int. Cl.: E01C 19/48, B60J 7/04

(54) **STRASSENBAUMASCHINE**

(30) Priorität: 01.03.2024 DE 102024106046
(71) Anmelder: BOMAG GmbH, 56154 Boppard (DE)
(72) Erfinder: KLEIN, Thomas, 56154 Boppard (DE); HAUBRICH, Thomas, 56154 Boppard (DE); JAKOBS, Stephan, 56154 Boppard (DE); KAMPS, Tobias, 56154 Boppard (DE)
(74) Vertreter: Zimmermann & Partner Patentanwälte mbB

(57) **Zusammenfassung**

Die Erfindung betrifft eine Straßenbaumaschine (1), insbesondere einen Straßenfertiger oder Beschicker. Die Straßenbaumaschine (1) umfasst einen Maschinenrahmen (3), ein von einem Antriebsmotor (4) betriebenes Fahrwerk (6), und einen in Arbeitsrichtung (a) vorne an der Straßenbaumaschine angeordneten Materialbunker (5) zur Aufnahme von Einbaumaterial. Ferner umfasst die Straßenbaumaschine einen Fahrerstand (2) mit einem seitlich ausschwenkbaren Fahrersitz (22) und einem Fahrerstanddach (23). Das Fahrerstanddach (23) umfasst mindestens ein seitlich ausschwenkbares und im Wesentlichen horizontales Dachsegment (24).

## Beschreibung

Die vorliegende Erfindung bezieht sich auf Straßenbaumaschinen, insbesondere Straßenfertiger zum Einbau von Einbaumaterial in einer Einbaurichtung oder Beschicker.

Gattungsgemäße Straßenfertiger werden üblicherweise im Straßen- oder Wegebau eingesetzt, sowie beim Anlegen von Plätzen. Ihre Hauptfunktion ist es, ein Einbaumaterial, beispielsweise Asphalt oder Beton, auf dem Boden zu verteilen und eine gleichmäßige, zumindest vorverdichtete Schicht des Einbaumaterials zu hinterlassen.

Straßenfertiger weisen üblicherweise einen Fahrerstand mit einem Fahrersitz und einem Bedienpult auf. Von dem Fahrerstand aus erfolgt die Bedienung der Baumaschine. Um einen guten Bedienkomfort, insbesondere bei Arbeiten über längere Zeiträume, zu ermöglichen, umfasst der Fahrerstand dazu regelmäßig einen Fahrersitz, von dem aus der im Fahrerstand befindliche Bediener der Baumaschine über das Bedienpult für den Betrieb der Baumaschine erforderliche Bedieneingaben tätigen kann.

Zur besseren Übersicht und Koordination ist der Fahrerstand oftmals offen, also nicht kabinenartig, ausgebildet, weist jedoch zum Wetterschutz ein Dach auf, welches den Bedienstand überspannt. Um je nach Arbeitssituation eine optimale Sicht auf den Arbeitsbereich zu haben, kann es sinnvoll sein, während des Arbeitsbetriebs unterschiedliche Standorte oder Sitzpositionen einzunehmen, um jeweils einen optimalen Überblick über das Geschehen zu haben. Um den Bedienkomfort für den Fahrer bei unterschiedlichen Positionen sowie eine optimale Sicht auf den Arbeitsbereich zu gewährleisten sind typischerweise das Bedienpult oder die Bedienpulte und der Fahrersitz oder die Fahrersitze verschiebbar und/oder schwenkbar ausgestaltet.

Die Aufgabe der vorliegenden Erfindung besteht darin, eine Straßenbaumaschine bereitzustellen, welche hinsichtlich eines oder mehrerer aus dem Stand der Technik bekannter Nachteile verbessert ist, insbesondere hinsichtlich des Bedienkomforts und Fahrerschutzes.

Die Lösung der Aufgabe gelingt mit einer Straßenbaumaschine gemäß dem unabhängigen Anspruch. Bevorzugte Weiterbildungen sind in den abhängigen Ansprüchen angegeben.

Gemäß einem Aspekt der Erfindung wird eine Straßenbaumaschine bereitgestellt. Die Straßenbaumaschine kann beispielsweise ein Straßenfertiger oder Beschicker sein. Die Straßenbaumaschine umfasst einen Maschinenrahmen, ein von einem Antriebsmotor betriebenes Fahrwerk und einen in Arbeitsrichtung vorne an der Straßenbaumaschine angeordneten Materialbunker zur Aufnahme von Einbaumaterial. Ferner umfasst die Straßenbaumaschine einen Fahrerstand mit einem seitlich ausschwenkbaren Fahrersitz und einem Fahrerstanddach. Der Fahrersitz kann ergänzend oder alternativ auch verschiebbar sein. Das Fahrerstanddach umfasst mindestens ein seitlich ausschwenkbares, im Wesentlichen horizontales Dachsegment.

Somit wird vorteilhafterweise eine Straßenbaumaschine bereitgestellt die gegenüber dem Stand der Technik hinsichtlich Bedienkomfort und Fahrerschutz verbessert ist. Insbesondere wird durch das seitlich ausschwenkbare Dachsegment ein flexibler und effektiver Wetterschutz für den Fahrer, insbesondere bei ausgeschwenktem Fahrersitz, bereitgestellt.

Gemäß der vorliegenden Offenbarung kann unter einem "Dachsegment" ein Teil des Fahrerstanddachs verstanden werden, das separat oder unabhängig von anderen Teilen des Fahrerstanddachs bewegt oder positioniert werden kann. Insbesondere ist das Dachsegment seitlich derart ausschwenkbar, dass es beim Aus- und Einschwenken eine im Wesentlichen horizontale Ausrichtung beibehält. Unter einem "ausschwenkbaren" Dachsegment kann ein Dachsegment verstanden werden, das ausgehend von einem nicht ausgeschwenkten Ausgangszustand in Bezug auf das Fahrerstanddach durch eine rotatorische Bewegung in einen ausgeschwenkten Zustand überführt werden kann. Bei dem Dachsegment handelt es sich vorzugsweise um ein gegenüber einem Hauptdach vorhandenes Zusatzdach, das im ausgeschwenkten Zustand zusammen mit dem Hauptdach eine gemeinsame Dachfläche bildet. Vorsorglich wird an dieser Stelle festgehalten, dass sich die Verstellbarkeit des Dachsegmentes gegenüber dem Hauptdach auf eine betriebsfertige Position des Hauptdaches bezieht, dieses also in einer Position ist, in der es den Fahrstand wenigstens teilweise überdeckt. Das Hauptdach befindet sich dann in einer Betriebsposition und nicht in einer optional möglichen Stauposition.

Typischerweise ist das Dachsegment mittels eines Drehgelenks an dem Fahrerstanddach befestigt. Insbesondere ist das Dachsegment üblicherweise in einem seitlichen und vorderen Bereich des Fahrerstanddachs befestigt. Insbesondere ist das Drehgelenk typischerweise derart ausgebildet, dass das Dachsegment um eine im Wesentlichen senkrechte Drehachse des Drehgelenks rotiert werden kann.

Es kann vorgesehen sein, dass die Drehachse des Dachsegmentes parallel oder koaxial zu einer Schwenkachse einer Sitzeinrichtung und/oder einer Seitenwand bzw. eines Seitenwandelementes des Fahrstandes verläuft. Die Drehachse liegt vorzugsweise in einem in Vorwärtsrichtung der Straßenbaumaschine gesehen vorderen Drittel des Dachsegmentes.

Gemäß einer bevorzugten Ausführungsform ist das Dachsegment in einem eingeschwenkten Zustand auf einer Innenseite des Fahrerstanddaches angeordnet. Die "Innenseite des Fahrerstanddachs" bezieht sich auf die Innenseite oder die untere Oberfläche des Dachs innerhalb des Fahrerstandes der Straßenbaumaschine, d.h. der dem Boden des Fahrstandes zugewandten Innenfläche des Fahrstandes. Vorzugsweise erstreckt sich die Innenseite des Fahrerstanddaches über den gesamten Bereich des Fahrerstandes und befindet sich ergänzend oder alternativ wenigstens teilweise direkt über dem Fahrersitz.

Beispielsweise kann auf der Innenseite das Fahrerstanddachs eine Führung für das Dachsegment vorgesehen sein, um das Dachsegment beim Ein- und Ausschwenken zu führen und/oder zu stabilisieren. Die Führung kann in Form einer Schiene, einer Nut oder einer anderen strukturellen Einrichtung ausgeführt sein, die entlang der Innenseite des Dachs verläuft. Zum Beispiel kann die Führung so gestaltet sein, dass das Dachsegment entlang dieser Führung gleiten oder rollen kann, um eine reibungslose und kontrollierte Bewegung zu gewährleisten. Die Führung kann vorteilhafterweise zur Stabilität und Sicherheit des Dachsegments beitragen, indem sie dessen Bewegung innerhalb eines definierten Pfads lenkt und führt.

Gemäß einer Ausführungsform, die mit anderen hierin beschriebenen Ausführungsformen kombiniert werden kann, weist eine Außenseite des Dachsegments eine Regenwasserableitvorrichtung auf. Die Außenseite des Dachsegments bezeichnet die äußere Oberfläche oder die Oberseite des beweglichen Dachsegments, das seitlich ausschwenkbar ist. Die Außenseite des Dachsegments ist dem Wetter und den Umwelteinflüssen ausgesetzt. Die Regenwasserableitvorrichtung ist typischerweise ausgelegt, um Regenwasser aufzufangen und gezielt und gerichtet abzuleiten, das auf das Dachsegment fällt. Die Regenwasserableitvorrichtung kann in Form einer oder mehrerer Rinnen eines Ablaufsystems ausgeführt sein, das dazu dient, das Regenwasser von der Oberfläche des Dachsegments wegzuleiten, um zu verhindern, dass es auf den Fahrerstand gelangt oder sich ansammelt. Typischerweise ist die Regenwasserableitvorrichtung dazu ausgebildet, um Wasser zu einer Hinter- und/oder Vorder- und/oder Außenkante des Dachsegments abzuleiten. Durch das Vorsehen einer Regenwasserableitvorrichtung kann das Regenwasser gezielt und kontrolliert abgeleitet werden, um potenzielle Störungen oder Unannehmlichkeiten während der Fahrt zu minimieren.

Das Dachsegment kann als Dachschale ausgebildet sein, insbesondere als Kunststoffteil. Es können ein oder mehrere sickenartige Strukturen von der Dachschale umfasst sein, um die Formstabilität der Dachschale zu erhöhen. Die sickenartigen Strukturen können gleichzeitig derart ausgebildet sein, dass sie eine oder mehrere Rinnen der Regenwasserableitvorrichtung bilden.

Gemäß einer weiteren bevorzugten Ausführungsform weist das Dachsegment eine Befestigungsvorrichtung zur, insbesondere manuell demontierbaren, Befestigung eines seitlichen Schutzfensters auf. Typischerweise ist die Befestigungsvorrichtung eine strukturelle Einrichtung oder eine spezielle Halterung, die am Dachsegment angebracht ist. Die Befestigungsvorrichtung kann integral mit dem Dachsegment ausgebildet sein oder durch ein separates Bauteil oder eine separate Baugruppe bereitgestellt werden. Ihre Hauptfunktion besteht darin, eine sichere und stabile Befestigung bzw. Halterung für ein seitliches Schutzfenster bereitzustellen. Das Schutzfenster kann dazu mit der Befestigungsvorrichtung zusammenwirkende Halteelemente aufweisen. Das Schutzfenster ist vorzugsweise wenigstens teilweise ein Fenster oder eine transparente Abdeckung, die seitlich am Fahrerstand angebracht ist und dazu dient, den Fahrer vor äußeren Einflüssen wie Wind, Regen, Schmutz oder herumfliegenden Objekten zu schützen. Es kann insbesondere aus Sicherheitsglas oder einem anderen robusten Material, insbesondere Kunststoffmaterial, hergestellt sein und ist so konzipiert, dass es dem Fahrer eine klare Sicht bietet, während es gleichzeitig als Barriere gegen verschiedenste Umwelteinflüsse dient.

Insbesondere kann die Befestigungsvorrichtung an einer seitlichen Außenkante des Dachsegments vorgesehen sein. Somit kann vorteilhafterweise ein seitliches Schutzfenster an dem schwenkbaren Dachsegment befestigt werden, so dass das seitliche Schutzfenster zusammen mit dem Dachsegment ausgeschwenkt werden kann. Dabei ist es jedoch bevorzugt, wenn das Dachsegment einen Außenkragen aufweist, der das seitliche Schutzfenster von oben kommend wenigstens im Bereich einer Oberkante des Schutzfensters übergreift.

Gemäß einer Ausführungsform, die mit anderen hierin beschriebenen Ausführungsformen kombiniert werden kann, umfasst die Straßenbaumaschine ferner einen elektromechanischen Schwenkmechanismus zum elektrischen Ein- und Ausschwenken des Dachsegments. Insbesondere kann der elektromechanische Schwenkmechanismus durch elektrische Energie aktiviert werden, um das Dachsegment in eine eingefahrene oder ausgefahrene Position zu bewegen.

Ferner kann die Straßenbaumaschine eine Fahrersitzzustandsbestimmungseinrichtung zur Bestimmung eines Schwenkzustands des Fahrersitzes umfassen. Die Fahrersitzzustandsbestimmungseinrichtung kann insbesondere dazu ausgebildet sein, abhängig vom Schwenkzustand des Fahrersitzes, den elektromechanischen Schwenkmechanismus zu steuern.

Unter einer "Fahrersitzzustandsbestimmungseinrichtung" kann eine Vorrichtung oder ein System verstanden werden, das den Zustand des Fahrersitzes erkennt und bestimmt, insbesondere hinsichtlich des Schwenkzustand des Fahrersitzes, also ob der Fahrersitz in eine bestimmte Position geschwenkt wurde oder nicht, und/oder insbesondere hinsichtlich des Verschiebezustandes des Fahrersitzes, also konkret in welcher Position entlang einer Verschiebeachse sich der Fahrersitz gerade befindet. Die Erfassung des Schwenkzustandes und/oder des Verschiebezustandes kann über den gesamten Verstellbereich erfolgen oder aber ausschließlich Verschiebe- und/oder Schwenkendlagen erfassen. Mit anderen Worten kann die "Fahrersitzzustandsbestimmungseinrichtung" verwendet werden, um festzustellen, ob der Fahrersitz in einer eingefahrenen oder ausgeschwenkten Position ist. Basierend auf dem erkannten Zustand des Fahrersitzes wird die "Fahrersitzzustandsbestimmungseinrichtung" dazu verwendet, den elektromechanischen Schwenkmechanismus zu steuern. Das bedeutet, dass je nachdem, ob der Fahrersitz eingefahren oder ausgefahren ist, die Fahrersitzzustandsbestimmungseinrichtung den Schwenkmechanismus aktivieren kann, um das Dachsegment der Straßenbaumaschine entsprechend einzuschwenken oder auszuschwenken.

Gemäß einer bevorzugten Ausführungsform ist das Fahrerstanddach aus einer Bedienposition heraus zusammen mit dem Dachsegment absenkbar und/oder abschwenkbar ausgebildet. Insbesondere kann der Fahrerstand derart ausgebildet sein, dass das Fahrerstanddach zusammen mit einem seitlichen Schutzfenster absenkbar ist, das an der Befestigungsvorrichtung des seitlich ausschwenkbaren Dachsegments befestigt ist. Durch das Absenken des Fahrerstanddachs kann die Gesamthöhe der Straßenbaumaschine insbesondere zu Transportzwecken verringert werden. Durch das Absenken des Fahrerstanddaches wird das Gesamtvolumen der Straßenbaumaschine reduziert, was den Transport erleichtert. Insgesamt bietet ein absenkbares Fahrerstanddach Flexibilität, Sicherheit und Effizienz für den Betrieb der Straßenbaumaschine in verschiedenen Umgebungen und Situationen.

Es ist bevorzugt, wenn das Fahrerstanddach sowohl auf der in Vorwärtsrichtung der Straßenbaumaschine rechten als auch auf der linken Seite jeweils ein Dachsegment der vorstehend beschriebenen Art aufweist.

Nachstehend wird die Erfindung anhand der in den Figuren dargestellten Ausführungsbeispiele näher erläutert, aus denen sich weitere Vorteile und Abwandlungen ergeben. Die Figuren zeigen schematisch:
Figur 1: eine schematische perspektivische Ansicht einer Straßenbaumaschine, insbesondere eines Straßenfertigers, von schräg vorne gemäß Ausführungsformen der vorliegenden Offenbarung; und
Figuren 2-5: schematische perspektivische Ansichten einer Straßenbaumaschine, insbesondere eines Straßenfertigers, von schräg hinten gemäß hierin beschriebenen Ausführungsformen.

Im Folgenden werden verschiedene Ausführungsformen beschrieben, von denen in jeder Abbildung ein oder mehrere Beispiele dargestellt sind. Jedes Beispiel dient der Erläuterung und ist nicht als Einschränkung zu verstehen. Beispielsweise können Merkmale, die als Teil einer Ausführungsform dargestellt oder beschrieben sind, auf oder in Verbindung mit jeder anderen Ausführungsform verwendet werden, um eine weitere Ausführungsform zu erhalten. Es ist beabsichtigt, dass die vorliegende Offenlegung solche Modifikationen und Variationen einschließt.

In der folgenden Beschreibung der Figuren beziehen sich die gleichen Referenznummern auf die gleichen oder ähnlichen Komponenten. Im Allgemeinen werden nur die Unterschiede in Bezug auf die einzelnen Ausführungsformen beschrieben. Sofern nicht anders angegeben ist, kann sich die Beschreibung eines Teils oder Aspekts in einer Ausführungsform auch auf ein entsprechendes Teil oder einen entsprechenden Aspekt in einer anderen Ausführungsform beziehen.

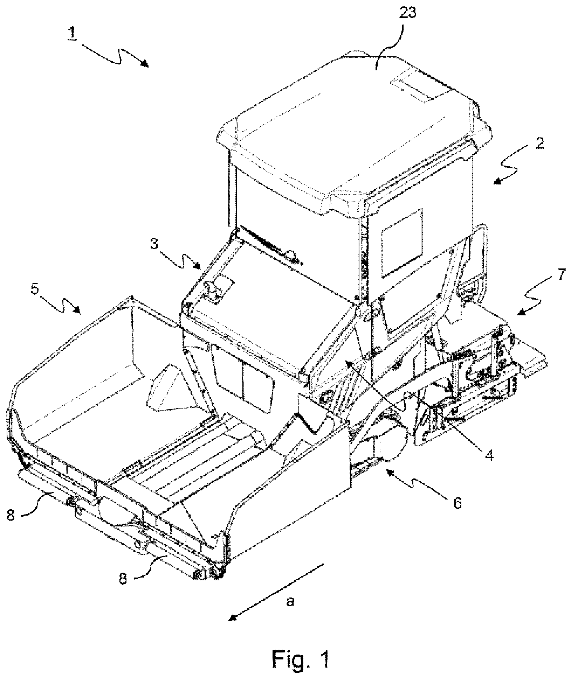

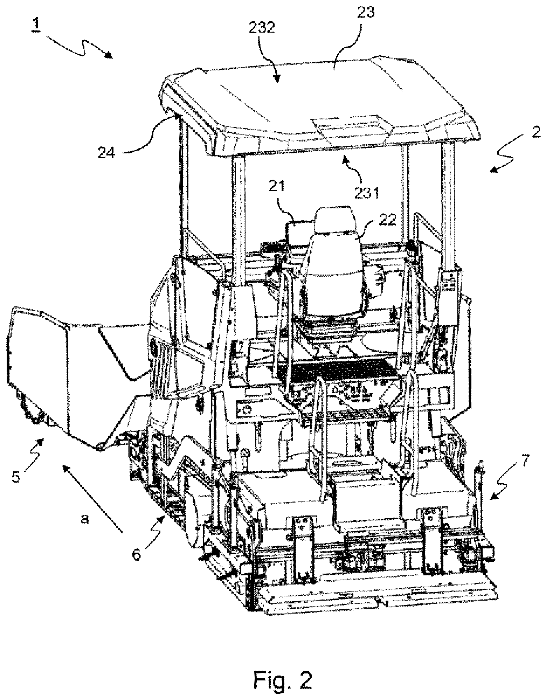

Figur 1 zeigt eine schematische perspektivische Ansicht von schräg Vorne einer Straßenbaumaschine 1, insbesondere eines Straßenfertigers zum Einbau von Einbaumaterial in einer Einbaurichtung a, gemäß einer Ausführungsform der vorliegenden Offenbarung. Die Figuren 2 bis 5 zeigen schematische perspektivische Ansichten von schräg Hinten der Straßenbaumaschine, insbesondere des Straßenfertigers gemäß der hierin beschriebenen Ausführungsform.

Die Straßenbaumaschine 1 umfasst einen Maschinenrahmen 3, einen Fahrerstand 2, einen Antriebsmotor 4, beispielsweise einen Dieselverbrennungsmotor, und einen in Einbaurichtung a vorne angeordneten Materialbunker 5. Der Straßenfertiger 1 umfasst weiterhin ein Fahrwerk 6. Neben dem gezeigten Kettenlaufwerk kann der Straßenfertiger alternativ auch Räder umfassen. Im Arbeitsbetrieb wird der Materialbunker 5 des Straßenfertigers durch einen vor dem Straßenfertiger herfahrenden LKW, der zumeist vom Straßenfertiger mit den Anfahrrollen 8 vor sich hergeschoben wird, mit Einbaumaterial befüllt. Vom Materialbunker 5 wird typischerweise das Einbaumaterial entgegen der Einbaurichtung a zum Heck des Straßenfertigers transportiert, an dem sich die Einbaubohle 7 befindet. Das Einbaumaterial wird quer zur Einbaurichtung a über die gesamte Einbaubreite verteilt und von der Einbaubohle 7 geglättet und verdichtet. Die Bedienung des Straßenfertigers 1 erfolgt dabei vom Fahrerstand 2 des Straßenfertigers aus. Dazu ist innerhalb des Fahrstandes üblicherweise wenigstens eine Bedieneinrichtung 21, beispielsweise in Form eines Bedienpanels oder einer Bedienkonsole, vorhanden, wie es beispielhaft in Figur 2 gezeigt ist. Im Einbaubetrieb steht oder sitzt der Bediener innerhalb des Fahrstandes 2 in Einbaurichtung a gesehen vor der Bedieneinrichtung 21, so dass der Bediener in Einbaurichtung sowohl auf die Bedieneinrichtung 21 als auch beispielsweise in den Materialbunker 5 blicken kann.

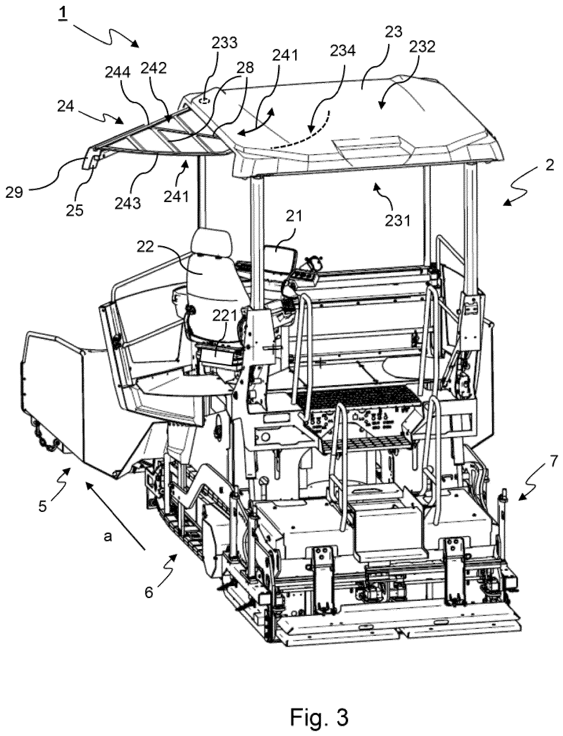

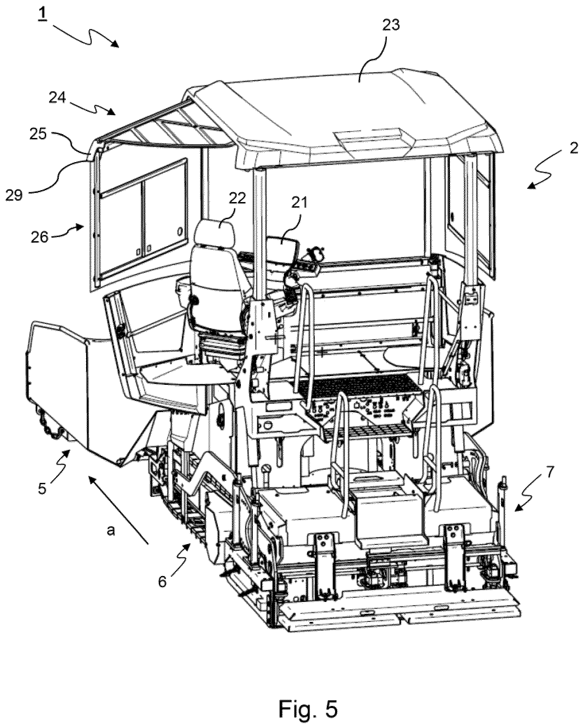

Zum Wetterschutz weist der Fahrstand 2 typischerweise ein Fahrerstanddach 23 auf. Üblicherweise ist im Fahrerstand 2 ein Fahrersitz 22 vorgesehen, der schwenkbar ausgebildet sein kann. Insbesondere kann der Fahrersitz 22 seitlich aus dem Fahrstand 2 herausschwenkbar sein, wie es beispielhaft in den Figuren 3 und 5 dargestellt ist.

Erfindungsgemäß umfasst das Fahrerstanddach 23 mindestens ein seitlich ausschwenkbares, im Wesentlichen horizontales Dachsegment 24. Wie es beispielhaft in Figur 3 gezeigt ist, ist das Dachsegment 24 typischerweise mittels eines Drehgelenks 233 an dem Fahrerstanddach 23 befestigt. Insbesondere kann das Drehgelenk 233 in einem seitlichen und vorderen Bereich des Fahrerstanddachs 23 angeordnet sein, wie es schematisch in Figur 3 dargestellt ist. Insbesondere ist das Drehgelenk 233 derart ausgebildet, dass das Dachsegment 24 um eine im Wesentlichen senkrechte Drehachse des Drehgelenks rotiert werden kann.

Typischerweise ist das Dachsegment 24 in einem eingeschwenkten Zustand auf einer Innenseite 231 des Fahrerstanddaches 23 angeordnet, wie es beispielsweise aus einer Zusammenschau der Figuren 2 und 3 hervorgeht. Im eingeschwenkten Zustand befindet sich das Dachsegment 24 unterhalb der Außenseite 232 und unterhalb der Innenseite 231 des Fahrerstanddaches 23.

Gemäß einer Ausführungsform ist auf der Innenseite 231 des Fahrerstanddachs 23 eine Führung 234 für das Dachsegment 24 vorgesehen, wie es schematisch in Figur 3 durch die gestrichelte Linie dargestellt ist. Die Führung 234 dient dazu, das Dachsegment 24 beim Ein- und Ausschwenken zu führen. Die Führung 234, die auf der Innenseite 231 das Fahrerstanddachs 23 angebracht ist, kann in verschiedenen Ausführungen wie einer Schiene, einer Nut oder einer anderen strukturellen Vorrichtung realisiert werden. Dadurch wird das Dachsegment befähigt, sich reibungslos und kontrolliert entlang dieser Führung zu bewegen, sei es durch Gleiten oder Rollen. Diese Art der Führung trägt positiv zur Stabilität und Sicherheit des Dachsegments bei, indem sie dessen Bewegung innerhalb eines festgelegten Pfads lenkt und führt.

Gemäß einer bevorzugten Ausführungsform weist eine Außenseite 242 des Dachsegments 24 eine Regenwasserableitvorrichtung 28 auf, wie es beispielhaft in Figur 3 dargestellt ist. Typischerweise ist die Regenwasserableitvorrichtung 28 dazu ausgebildet, um Wasser zu einer Hinterkante 243, insbesondere bezogen auf die Arbeitsrichtung a, des Dachsegments 24 gezielt, kanalisiert und gerichtet abzuleiten. Die Regenwasserableitvorrichtung 28 kann in Form einer oder mehrerer Rinnen, beispielsweise eines Ablaufsystems, ausgeführt sein, das dazu dient, das Regenwasser von der Oberfläche des Dachsegments wegzuleiten, um zu verhindern, dass es auf den Fahrerstand gelangt oder sich dort ansammelt.

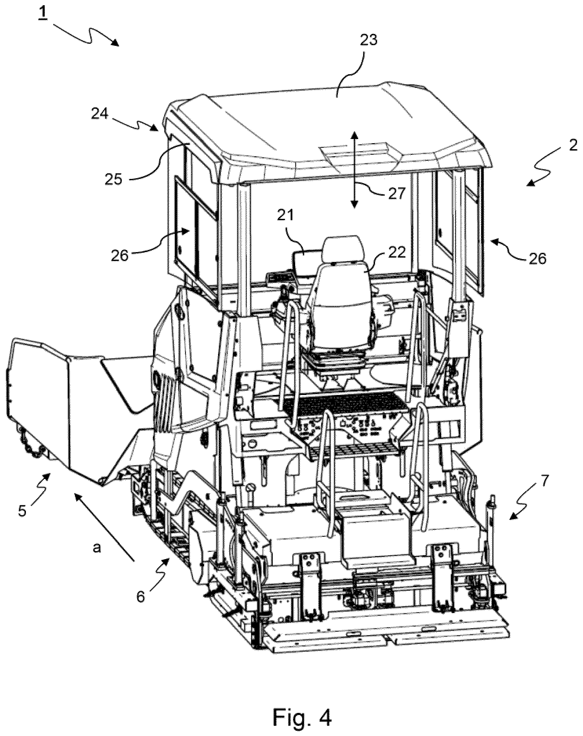

In bevorzugter Weise weist das Dachsegment 24 eine Befestigungsvorrichtung 25 zur Befestigung eines seitlichen Schutzfensters 26 auf, wie es beispielhaft in den Figuren 3, 4 und 5 dargestellt ist. Typischerweise ist die Befestigungsvorrichtung 25 an einer seitlichen Außenkante 244 des Dachsegments 24 vorgesehen. Figur 3 zeigt ein Beispiel ohne Schutzfenster, wobei in den Beispielen der Figuren 4 und 5 ein an der Befestigungsvorrichtung 25 befestigtes Schutzfenster dargestellt ist.

Gemäß einer Ausführungsform kann ein elektromechanischer Schwenkmechanismus 241 zum elektrischen Ein- und Ausschwenken des Dachsegments 24 vorgesehen sein, wie es schematisch in Figur 3 durch den Doppelpfeil angedeutet ist. Ferner kann eine Fahrersitzzustandsbestimmungseinrichtung 221 zur Bestimmung eines Schwenkzustands des Fahrersitzes 22 vorgesehen sein. Beispielsweise kann die Fahrersitzzustandsbestimmungseinrichtung 221 dazu ausgebildet sein ,abhängig vom Schwenkzustand des Fahrersitzes den elektromechanischen Schwenkmechanismus 241 zu steuern, so dass beispielweise ein Ein- und Ausschwenken des Fahrersitzes und des Dachsegments synchron durchgeführt werden kann.

Es versteht sich, dass das Fahrerstanddach auch zwei sich gegenüberliegende ein- und ausschwenkbare, im Wesentlichen horizontale Dachsegmente gemäß hierein beschriebenen Ausführungsformen umfassen kann, nämlich ein erstes schwenkbares Dachsegment auf der in Arbeitsrichtung a linken Seite, wie es in den Figuren 2 bis 5 dargestellt ist, und ein zweites schwenkbares Dachsegment auf der in Arbeitsrichtung a rechten Seite der Straßenbaumaschine.

Wie schematisch durch den Doppelpfeil in Figur 4 dargestellt ist, kann das Fahrerstanddach 23 der Straßenbaumaschine absenkbar sein. Insbesondere kann der Fahrerstand 2 derart konfiguriert sein, dass das Fahrerstanddach 23 zusammen mit einem an der Befestigungsvorrichtung 25 des Dachsegments befestigten seitlichen Schutzfenster 26 absenkbar ist. Hierzu kann beispielsweise ein vertikaler Verstellmechanismus 27, insbesondere ein elektromechanischer Verstellmechanismus, vorgesehen sein.

Wie aus den hierin beschriebenen Ausführungsformen hervorgeht wird vorteilhafterweise eine Straßenbaumaschine bereitgestellt, welche hinsichtlich Bedienkomfort und Fahrerschutz verbessert ist. Insbesondere, wird durch das seitlich ausschwenkbare Dachsegment ein flexibler und effektiver Wetterschutz für den Fahrer, insbesondere bei ausgeschwenktem Fahrersitz, bereitgestellt.

### BEZUGSZEICHENLISTE

- 1: Straßenbaumaschine
- 2: Fahrerstand
- 21: Bedieneinrichtung
- 22: Fahrersitz
- 221: Fahrersitzzustandsbestimmungseinrichtung
- 23: Fahrerstanddach
- 231: Innenseite des Fahrerstanddaches
- 232: Außenseite des Fahrerstanddaches
- 233: Drehgelenk
- 234: Führung
- 24: seitlich ausschwenkbares Dachsegment
- 241: Innenseite des Dachsegments
- 242: Außenseite des Dachsegments
- 243: Hinterkante des Dachsegments
- 244: Seitliche Außenkante des Dachsegments
- 25: Befestigungsvorrichtung
- 26: Schutzfenster
- 27: Vertikaler Verstellmechanismus
- 28: Regenwasserableitvorrichtung
- 29: Außenkragen
- 3: Maschinenrahmen
- 4: Antriebsmotor
- 5: Materialbunker
- 6: Fahrwerk
- 7: Einbaubohle
- 8: Anfahrrollen
- a: Arbeitsrichtung/Einbaurichtung

## Patentansprüche

1. Straßenbaumaschine (1), insbesondere Straßenfertiger oder Beschicker, umfassend:
- einen Maschinenrahmen (3),
- ein von einem Antriebsmotor (4) betriebenes Fahrwerk (6),
- einen in Arbeitsrichtung (a) vorne an der Straßenbaumaschine angeordneten Materialbunker (5) zur Aufnahme von Einbaumaterial, und
- einen Fahrerstand (2) mit einem seitlich verschiebbaren und/oder ausschwenkbaren Fahrersitz (22) und einem Fahrerstanddach (23),
**dadurch gekennzeichnet,**
**dass** das Fahrerstanddach (23) mindestens ein seitlich ein- und ausschwenkbares, im Wesentlichen horizontales Dachsegment (24) umfasst, und dass das Dachsegment (24) eine Befestigungsvorrichtung (25) zur Befestigung eines seitlichen Schutzfensters (26) aufweist.

2. Straßenbaumaschine (1) gemäß Anspruch 1, wobei das Dachsegment (24) mittels eines Drehgelenks (233) an dem Fahrerstanddach (23), insbesondere in einem seitlichen und vorderen Bereich des Fahrerstanddachs (23), befestigt ist.

3. Straßenbaumaschine (1) gemäß Anspruch 1 oder 2, wobei das Dachsegment (24) in einem eingeschwenkten Zustand auf einer Innenseite (231) des Fahrerstanddaches (23) angeordnet ist.

4. Straßenbaumaschine (1) gemäß Anspruch 3, wobei auf der Innenseite (231) das Fahrerstanddachs (23) eine Führung (234) für das Dachsegment (24) vorgesehen ist, um das Dachsegment (24) beim Ein- und Ausschwenken zu führen.

5. Straßenbaumaschine (1) gemäß einem der Ansprüche 1 bis 4, wobei eine Außenseite (242) des Dachsegments (24) eine Regenwasserableitvorrichtung (28) aufweist.

6. Straßenbaumaschine (1) gemäß Anspruch 5, wobei die Regenwasserableitvorrichtung (28) dazu ausgebildet ist, um Wasser zu einer Hinterkante (243) oder Vorderkante des Dachsegments (24) abzuleiten.

7. Straßenbaumaschine (1) gemäß einem der Ansprüche 1 bis 6, wobei die Befestigungsvorrichtung (25) an einer seitlichen Außenkante (244) des Dachsegments (24) vorgesehen ist.

8. Straßenbaumaschine (1) gemäß einem der Ansprüche 1 bis 7, wobei das Dachsegment (24) einen Außenkragen aufweist, der das seitliche Schutzfenster von oben kommend wenigstens im Bereich einer Oberkante des Schutzfensters übergreift

9. Straßenbaumaschine (1) gemäß einem der Ansprüche 1 bis 8, ferner umfassend einen elektromechanischen Schwenkmechanismus (241) zum elektrischen Ein- und Ausschwenken des Dachsegments (24).

10. Straßenbaumaschine (1) gemäß Anspruch 9, ferner umfassend eine Fahrersitzzustandsbestimmungseinrichtung (221) zur Bestimmung eines Schwenkzustands des Fahrersitzes (22), wobei die Fahrersitzzustandsbestimmungseinrichtung (221) dazu ausgebildet ist abhängig vom Schwenkzustand des Fahrersitzes den elektromechanischen Schwenkmechanismus (241) zu steuern.

11. Straßenbaumaschine (1) gemäß einem der Ansprüche 1 bis 10, wobei das Fahrerstanddach (23) absenkbar ist, insbesondere mit einem an der Befestigungsvorrichtung (25) befestigten seitlichen Schutzfenster (26) gemäß Anspruch 8.
